# EUROPEAN PATENT SPECIFICATION

(11) **EP 3 130 821 B1**
(45) Date of publication and mention of the grant of the patent: **02.01.2019**
(21) Application number: 15002398.4
(22) Date of filing: 12.08.2015
(51) Int. Cl.: F16H 7/08, F16H 7/18

(54) **TIMING CHAIN SYSTEM**
STEUERKETTENSYSTEM
SYSTÈME DE CHAÎNE DE SYNCHRONISATION

(43) Date of publication of application: 15.02.2017
(73) Proprietor: iwis motorsysteme GmbH & Co. KG, 81369 München (DE)
(72) Inventor: Bachmair, Peter, 82131 Gauting (DE); Latz, Steffen, 81669 München (DE); Lindner, Ulrich, 81547 München (DE)
(74) Representative: Grünecker Patent- und Rechtsanwälte PartG mbB

(56) References cited:
- DE-A1- 19 536 643
- DE-A1-102004 048 282
- DE-A1-102007 012 770
- DE-A1-102011 075 155

## Description

This invention relates to a timing chain system comprising a crankshaft sprocket, at least one camshaft sprocket, a timing chain operably connecting the crankshaft sprocket and at least one camshaft sprocket and adjusting means which adjusts the phase or circumferential position of the at least one camshaft sprocket relative to that of the crankshaft sprocket.
Such a system is for example known from US 5,152,261. The system is used on an automotive engine and connects a camshaft to a crankshaft. The timing chain used has a certain length which only changes during its lifespan to a certain allowable extent through wear. Due to the fact that such a change in length takes a considerable amount of time, the chain does not undergo any length changes during the normal operation times of a vehicle for example. However, it is important that dependent on the distance between the crankshaft, especially the slack strand of the chain has to be guided and biased by a chain tensioner system in order to maintain a proper engagement of the sprocket and the chain. Also the taut strand of the chain is usually at least guided by a guiding means. It is known that a phase shift of the camshaft relative to the crankshaft can be accomplished by changing the effective length of the chain portion belonging to the taut strand of the chain. In US 5,152,261 pivoted shoes are used, one being in contact with the outside of the slack strand of the chain and one being in contact with the outside of the taut strand of the chain. Each shoe is moved by a respective hydraulic tensioner, the hydraulic tensioner working in unison to vary the length of the slack and the taut strand in order to gain a phase shift of the camshaft. This system is relatively complex and affords much mounting space. DE 10 2007 012 770 A1 shows a further tensioning device for an endless drive for a combustion engine. The tensioning device comprises a base body, a slide element which is pivotally arranged on the base body, and a chain tensioner which is integrated in the base body and which acts on the slide element to push it in the direction of the chain, thereby tensioning the chain.

The closest prior art document DE 10 2004 048 282 A1 shows an endless drive system with a driving sprocket and a driven sprocket which are connected by a belt element, for example a chain or a belt, and with a tensioning device which acts on the belt element at least at two positions. The tensioning device comprises a pivotally mounted angle lever with two lever arms which can be forced against the interior of the belt element for tensioning the belt element.
As a result, the problem to be solved is to be seen in designing a simpler and less space-intensive timing chain system.

This problem is solved by a timing chain system as defined in claim 1.

In this system the guide rail as well as the tensioning rail are positioned within the loop of the timing chain. Also the actuator might be placed there in order to conserve space. Although it is also known to place a phase shift mechanism inside the loop of a chain, this has never been suggested for a drive connecting the crankshaft sprocket with at least one camshaft. It is only known for a camshaft/camshaft drive in order to change the phase between two camshafts and with linearly operated shoes. Only one actuator for the guide rail might be needed and the force balance within the loop of the timing chain assures that the tensioning rail follows the movement of the guide rail The pivot axis of the tensioning rail and the guide rail could be identical. However, for a crankshaft/camshaft drive it is mostly advantageous to have distinct axis.
In order to simplify the design, in an embodiment the actuator might be designed to carry out a common adjustment of the tension rail and the guide rail with both either in a clockwise or counter clockwise pivotal direction. So only a common actuator is needed and the two rails might be coupled in another way. Also here, if the effective length of the taut strand is increased, the effective length of the slack strand has to be decreased by approximately the same amount. As already stated above, according to a further variant it is especially advantageous for a crankshaft/camshaft drive that the pivot axis of the tensioning rail and the guide rail might be arranged in a parallel distance from each other. Through this design, the pivot path of each of the rails can be smaller in order to gain a certain change of the effective length of the taut strand and the slack strand respectively. According to an advantageous embodiment, the tensioning rail might be biased against the inside of the slack strand of the timing chain by the addition of a damping chain tensioner. According to this embodiment, a distinction could be made between the tensioning rail and the guide rail. The guide rail does not need to be dampened. It might be adjusted by the actuator without a damping means, whereas damping is something which is of the utmost advantage to the slack strand and accordingly a damping chain tensioner is used:

Through this design, the noise and wear of the timing chain system is automatically reduced by the adjusting means.

In a further advantageous variant, the chain tensioner might be arranged on the guide rail which may save further space. This means that the coupling between the tensioning rail and the guide rail might be solely made by the chain tensioner which keeps contact between the guide rail and the tensioning rail.

Most preferably, the guide rail may comprise a rail body housing the chain tensioner. This leaves room for plenty of advantageous designs. For example, according to a further em-bodiment, the rail body of the guide rail and a housing of the chain tensioner might be formed as a unitary element. This of course also eases the manufacturing process because the rail body of the guide rail and the housing can be formed in one manufacturing process as for example by using aluminum or steel casting.

Especially in instances where it is difficult or nearly impossible to connect the chain tensioner to a hydraulic fluid supply system, it might be advantageous for the guide rail to form an open hydraulic fluid pocket for collecting hydraulic fluid and forming a hydraulic fluid reservoir which is in flow communication with an inlet of the chain tensioner. The timing chain system usually runs in a lubricated environment containing an oil sump, etc. Some of the oil is always distributed through the chain and sprockets within the areas of this whole system and thus it is usually easy to collect some of the hydraulic fluid through such appropriate means and direct it to the chain tensioner so that it may fulfill its damping function. This is especially advantageous in cases where the chain tensioner is arranged on the guide rail where a connection to a pressurized hydraulic supply system is somewhat difficult.

In order to gain reasonable actuating forces in one variant, the actuator might act on the guide rail in a distance from the pivot axis of the guide rail which is at least 25% of the shortest distance between the pivot axis and the contact point of the chain tensioner and the tensioning rail. As the distance between the pivot axis and the contact point of the chain tensioner may vary dependent on the pivotal position of the guide rail, it is referred to the shortest distance which is possible during normal operations. It has been found that in most advantageous designs, the distance is approximately 50% of the shortest distance between the pivot axis and the contact point of the chain tensioner and the tensioning rail. Such a design would leave sufficient space for the arrangement of the chain tensioner on the guide rail and would certainly make sufficient space for the arrangement of the actuator and in addition actuating forces which have to be applied are still reasonable.

According to a further advantageous embodiment, the shortest distance between the pivot axis of the guide rail and/or the pivot axis of the tensioning rail to the contact point of the chain tensioner and the tensioning rail is at least 50% of the shortest distance between the axis of the crankshaft and the axis of the at least one camshaft. Again, a shortest distance is referred to because if more than one camshaft is present, the distances might be different but they would usually be the same. In a more preferred design, that distance might be at least 60% instead of 50%.

This design assures that the adjusting means fill a considerable length within the loop of the timing chain and might therefore provide for sufficient support of the timing chain and a proper tensing and guiding. It also opens the possibility of using rather slim rails to fulfill this function.

In order to provide for a proper guiding and tensioning of the timing chain and to thus make certain of the proper operation of the timing chain system, in one embodiment the shortest length of the effective sliding contact between the guide rail and/or tensing rail is at least 60% of the shortest distance between the axis of the crankshaft and the axis of at least one camshaft. Referred to here is an effective sliding contact because this sliding contact of the rail is dependent on the pivotal position of the guide rail or the tensioning rail. It is measured from the first contact of the chain on the respective rail (running in off the chain) and the last contact (running out off the chain). Most preferably, the shortest length is at least 65% instead of 60%.

The invention also refers to an adjusting means for a timing chain system according to one of claims 1 - 12. The adjusting means comprising a pivotally attached tensioning rail which is biased against the inside of the slack strand of the timing chain between the crankshaft and at least one camshaft, a pivotally attached guide rail which is in contact with the inside of the taut strand of the timing chain between the crankshaft and at least one camshaft and an actuator for adjusting the pivotal position of the guide rail or the tensioning rail in order to adjust the phase or circumferential position of at least one camshaft sprocket relative to that of the crankshaft sprocket.

The invention also refers to an IC (internal combustion) engine comprising a crankshaft, at least one camshaft and a timing chain system according to one of claims 1 - 12. Especially in cases where only one crankshaft and only one camshaft are used, the engine can be rather slim. Particularly in embodiments where the camshaft sprocket has an identical number of teeth as in the crankshaft sprocket such a design can be used in a two-stroke engine or in an engine having a further transmission gear between the camshaft sprocket and the camshaft.

In the following, a preferred embodiment of the present invention is referred to by means of drawings and the following description in which
**fig. 1** shows a front view of a timing chain system according to the present invention (partially in section),
**fig. 2** the guide rail of fig. 1 in an enlarged scale and partially in section,
**fig. 3** the guide rail of fig. 1 in a rear view and partially in section,
**fig. 4** the guide rail of fig. 1 seen from the left side,
**fig. 5** the guide rail of fig. 1 seen from the right side,
**fig. 6** a section of the guide rail taken along the lines VI - VI,
**fig. 7** A section of the guide rail taken along the lines VII - VII, and
**fig. 8** a section of the guide rail taken along the lines VIII - VIII.

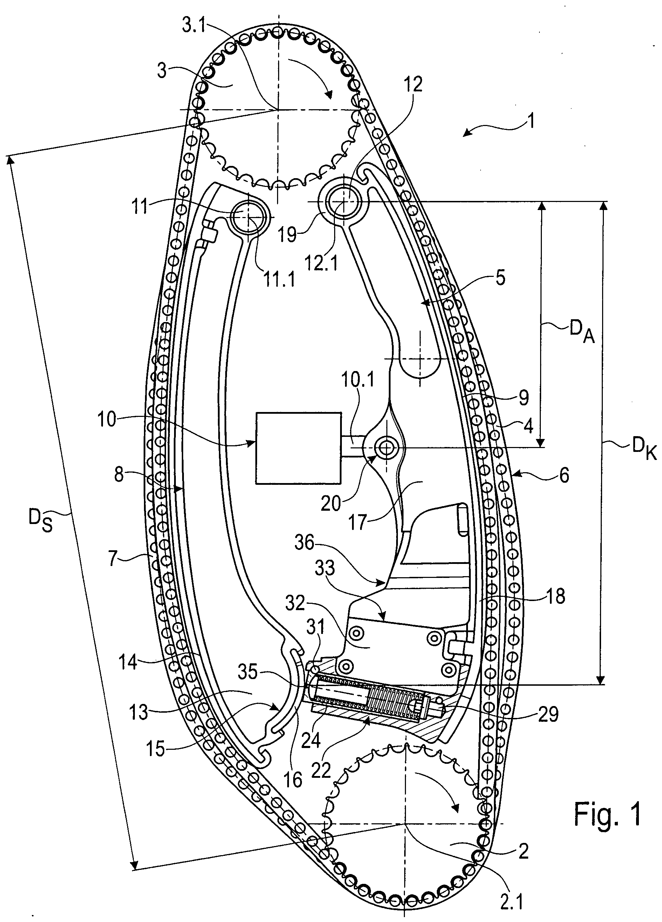

In fig. 1 the main elements of a timing chain system 1 of an automotive engine (otherwise not shown) is depicted which comprises a crankshaft sprocket 2 attached to the crankshaft (not shown) of the automotive engine, a camshaft sprocket 3 attached to a crankshaft (not shown) of the automotive engine, a timing chain 4 which transmits rotary motion from the driving crankshaft sprocket 2 to the driven camshaft sprocket 3, as well as an adjusting means 5, located within the loop of the timing chain 4. The timing chain system 1 is for a two-stroke engine with the crankshaft sprocket 2 and a camshaft sprocket 3 having an identical number of teeth. The timing chain 4 can be a bush chain or a roller chain. The timing chain 4 is depicted in two distinct positions dependent from the adjustment made by the adjusting means 5 which will be explained in more detail below.

The crankshaft 2 rotates in a clockwise direction so that the crankshaft sprocket 2 and the camshaft sprocket 3 also rotate in a clockwise direction. Due to this rotational direction of the crankshaft sprocket 2, the driving force is mainly transmitted through the taut strand 6 of the timing chain 4 which is on the right side in fig. 1. On the left side, there is the slack strand 7 of the timing chain 7 which has an increased tendency to oscillate and therefore has to be tensioned.

The timing chain 4 is trained around crankshaft sprocket 2 and camshaft sprocket 3 in a bend which is slightly less than 180° and these bends are connected to the left side by the slack strand 7 and on the right side by the taut strand 6 so that the timing chain 4 forms the above mentioned closed loop having an inside and an outside. The adjusting means 5 is completely located within the boundary of the inside of the loop of the timing chain 4.

The axis 2.1 of the crankshaft sprocket 2 and the axis 3.1 of the camshaft sprocket 3 extend parallel to each other as of course do the axis of the crankshaft and the camshaft. The distance D_{S} of the two axes 2.1 and 3.1 is in the embodiment shown as approximately 345 mm.

We now turn to the design of the adjusting means 5. The adjusting means 5 comprises a pivotally attached tensioning rail 8 which is biased against the inside of the slack strand 7, a pivotally attached guide rail 9 which is in contact with the inside of the taut strand 6 as well as an actuator 10 which is in functional contact with the guide rail 9.

The tensioning rail is pivotally mounted on a pivot bolt 11 and the guide rail 9 is pivotally movable around a pivot bolt 12. Both pivot bolts 11 and 12 are attached to and extending from the engine block. Both pivot bolts 11 and 12 are located near the camshaft sprocket 3 in the upper region of the engine. The axis 11.1 of pivot bolt 11 and the axis 12.1 of pivot bolt 12 have a distance from each other so that the axis 11.1 is located on the left side of the axis 3.1 of the cam sprocket 3 and the axis 12.1 on the right side of the axis 3.1 of the cam sprocket 3.

The tensioning rail 8 has a body portion 13 forming the support structure of the tensioning rail 8 and also the portion in which the pivot bolt 11 is inserted. The material of the body portion 13 is preferably a fibre reinforced plastics or a metal such as cast aluminum or cast steel. Attached to the body portion 13 is a relatively thin guide shoe 14, the attachment is made by a snap-fit construction which is well known in the art so that a longitudinal relative movement between the body portion 13 and the guide show 14 is possible due to thermal expansion. The guide shoe 14 is preferably made from a plastics material having a low co-efficient of friction as for example PTFE. The guide shoe 14 is in contact with the inside of the slack strand 7 of the timing chain 4. The guide surface of the guide shoe 14, which comes into contact with the timing chain 4 is curved convexly so that the timing chain 4 has a running path adapted thereto. This leads to a more equal distribution of the loads on the slack strand 7.

The lower end of the body portion has a bigger height and forms an attachment section 15 for a pressure plate 16. Attachment section 15 and the pressure plate 16 are convexly curved so that the pressure plate 16 forms a pressure surface the function of which will be explained in more detail below.

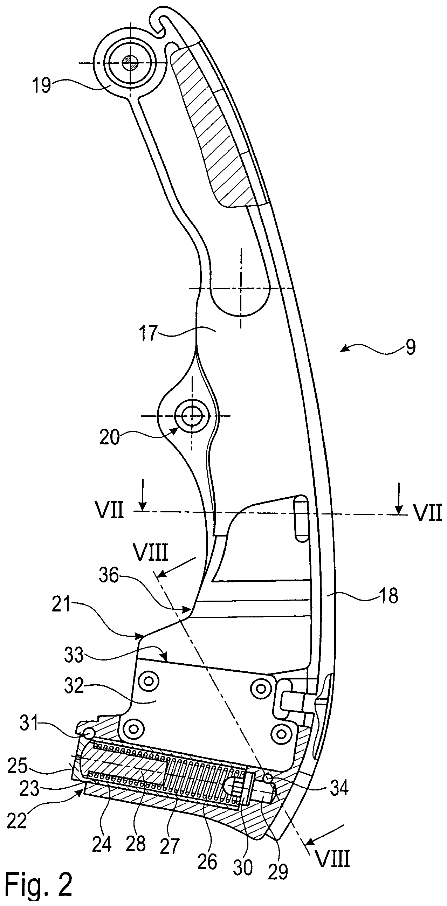

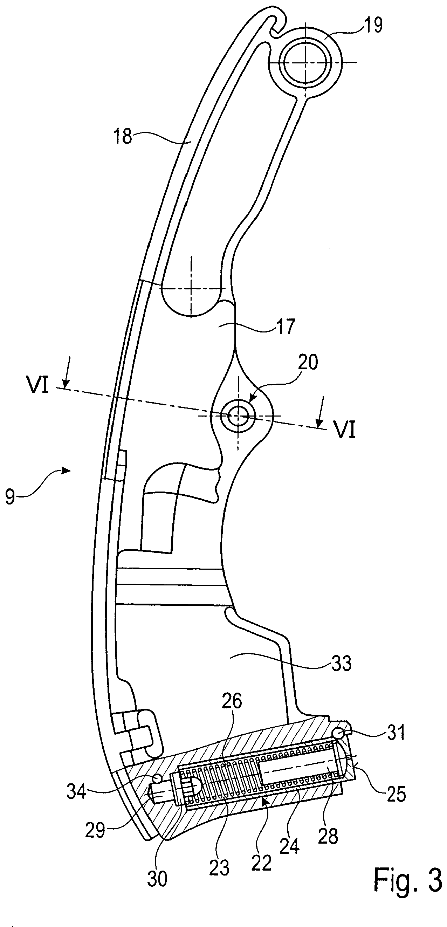

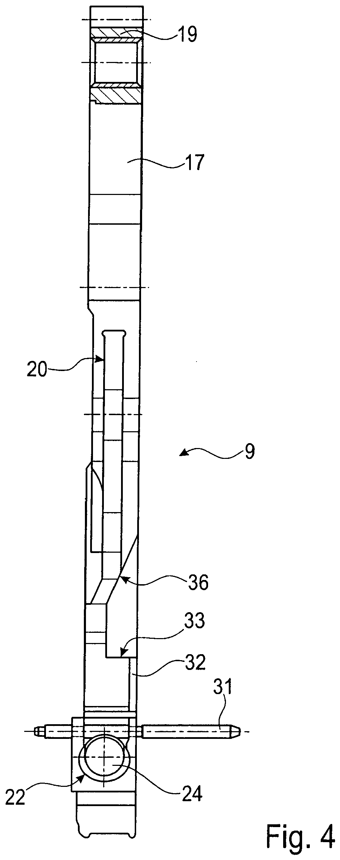

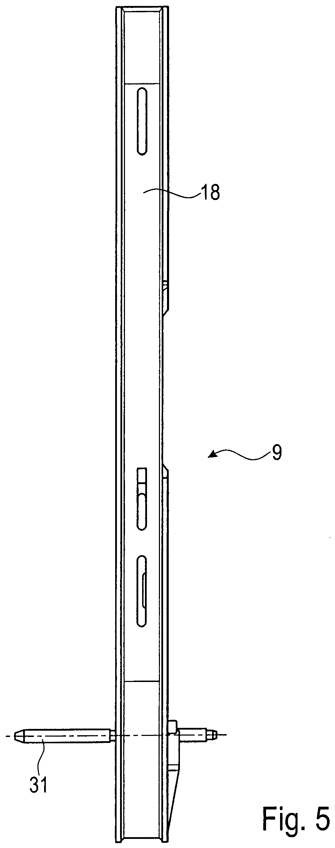

In the following, an additional reference is also made to figs. 2 - 8 to more clearly explain the design of the guide rail 9.

The guide rail 9 has a body portion 17 forming the support structure of the guide rail 9 and being made from fibre-reinforced plastics or a metal, e.g. cast aluminum or cast steel. Attached to the body portion 17 is a rather thin guide shoe 18 made from a plastics material having a low co-efficient of friction such as PTFE and which is in contact with the inside of the taut strand 6. The guide shoe 18 is attached to the body portion 17 in a known manner by using a snap-fit structure so that it can cope with thermal expansion relative to the body portion 17.

The body portion 17 has four main sections. In the upper first section, body portion 17 forms an attachment which receives the pivot bolt 12. In the second mid-section, the body portion 17 has an attachment which is pivotally connected to a piston 10.1 of the actuator 10. The actuator 10 is attached to the engine block (engine casing) and is either electrically or hydraulically driven. The two remaining sections are both located in the lower end of the body portion and are interrelated and functioning closely. In the third section, there is formed a hydraulic fluid collecting means 21 and below it a chain tensioner 22 is integrated into the body portion 17. As can be seen, the housing of the chain tensioner 22 is an integrated part of the body portion 17 and forms a unit with it. For that reason, the body portion 17 is provided with a housing bore 23 which is open to the left side of fig. 2. The housing bore 23 slidingly receives a tensioning piston 24. The end face 25 of the tensioning piston 24 is in contact with the pressure plate 16 of tensioning rail 8. The rear side of the tensioning piston is provided with a bore so that the tensioning piston 24 is hollow from the rear side. The rear side of the tensioning piston 24 and the housing bore 23 form therebetween a pressure chamber 26. Within this pressure chamber 26 a compression spring 27 as well as a filling body 28 which has a mushroom shape are located. The filling body 28 is made from a plastics material and its two main purposes are for a reduction of the volume of the pressure chamber 26 and a protection between the one end of the compression spring 27 and the tensioning piston 24 as well as providing some guidance for the compression spring 27. The chain tensioner 22 also has an inlet 29 and located in the inlet 29 is a one-way valve 30 so that the hydraulic fluid may flow into the pressure chamber 26 but not back to the inlet 29. Such a structure of a chain tensioner is readily known in the art and other chain tensioner designs could also be used. At the front section of the chain tensioner 22 is located a locking pin 31 which secures the tensioning piston 24 against the load of the compression spring 27 in the housing bore 23. This locking pin 31 is only provided for assembly and transport purposes and it is removed before the engine and the timing chain system 1, including the adjusting means 5, starts operation.

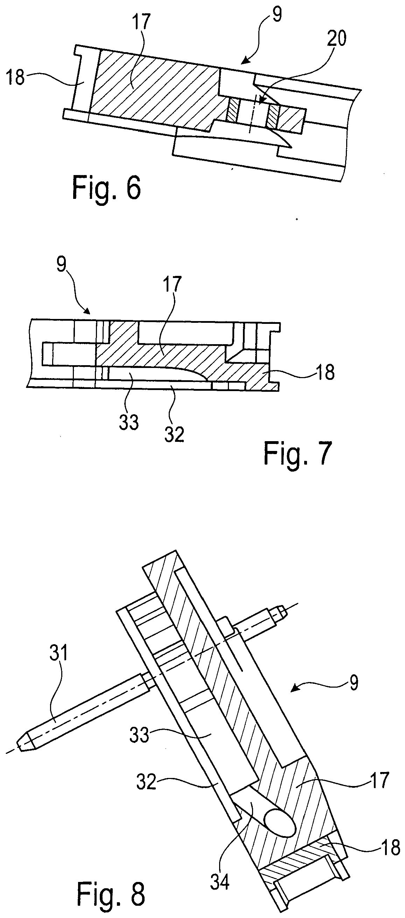

As can also be seen from figs. 7 and 8, a plate 32 is attached to one side of the body portion 17 so that its outer surface is essentially flush with the corresponding section of the body portion 17. The plate 32 and the body portion 17 are formed in such a way that therebetween an open collecting pocket 33 is formed. The collecting pocket 33 is in flow connection through a bore 34 with the inlet 29 of the chain tensioner 22. The collecting pocket 33 is open in the direction of the pivoted end of the guide rail 9 and the body portion 17 is shaped above the opening of the collecting pocket 33 such that if forms a kind of funnel 36 so that hydraulic fluid is gathered and guided into the collecting pocket 33 so that it forms therein an hydraulic fluid reservoir which creates the hydraulic fluid supply for the chain tensioner 22.

The contact surface of the guide shoe 18 is convexly curved in the longitudinal direction and thus the timing chain 4 conforms to this in an arc wise bow in order to achieve a more equal distribution of the loads from the guide rail 9 to the taut strand 6.

The actuator 10 can be of any kind suitable to be attached to the engine and for pivotally moving the guide rail 9 about the pivot axis 12.1.

Preferably the actuator 10 is suitable for actively moving the guide rail 9 back and forth. The actuator 10 is usually not provided with a damping function so that in each adjusted position of the guide rail 9 it actually functions as a usual guide rail 9 having only the structurally involved damping abilities and no hydraulically influenced damping function. Contrary thereto, the tensioning rail 8 is coupled to the guide rail 9 by means of the chain tensioner 22. The actuated chain tensioner 22 (locking pin 31 is removed) presses against the end face 25 of its tensioning piston 24 against the pressure plate 16 of the tensioning rail 8. Due to a small gap (not shown in the drawings) between the outer surface of the tensioning piston 24 and the housing bore 23, a certain amount of hydraulic fluid may exit (leaks out) the pressure chamber 26 although the one-way valve 30 is blocked upon inward movement of the tensioning piston 24. This creates a hydraulic dampening function so that the guide rail 9 and the the slack strand of the timing chain 4 are hydraulically damped in order to reduce vibration and the creation of noise. The end face 25 of the tensioning piston 24 might also be provided with a tiny venting bore which is usual in these kinds of chain tensioners.

The end face 25 of the tensioning piston 24 and the pressure plate 16 have a contact point 35. The distance D_{K} from the contact point 35 to the pivot axis 12.1 is dependent on the pivotal position of the guide rail 9. However, the deviation is nearly negligible but for clarity purposes it is referred to the shortest distance D_{K} that is possible during normal operation of the timing chain system 1. The centre of the attachment eye 20 has a distance D_{A} to the axis 12.1 which is approximately 50% of the distance D_{K} and thus fulfils the requirement of being at least 25% of the shortest distance D_{K}. In addition, the shortest distance D_{K} is approximately 75% of the distance Ds (and thus fulfils the requirement of being at least 50% of the shortest distance D_{S} and preferably at least 60% of the distance D_{S}. This similarly applies to the distance between the pivot axis 11.1 and the contact point 35 of the tensioning rail 8.

The shortest length of the effective sliding contact between the guide rail 9 or the tensioning rail 8 is at least 60% of the shortest distance D_{S} between the axis 2.1 of the crankshaft sprocket and the axis 3.1 of the camshaft sprocket 3.

In the following, the function and the effects of the invention will be described in view of the above described embodiment.

One of the main purposes of the adjusting means 5 is the advancing or retarding of the phase or circumferential position of the camshaft sprocket 3 relative to the crankshaft sprocket 2. This can be achieved by varying the effective length of the taut strand 6 of the timing chain 4. This can be done by pivotally moving the guide rail 9 clockwise or counterclockwise by means of the actuator 10. The actuator 10 might be coupled to the motor control or some other kind of controller so that the adjustment is made to be dependent from the engine operation or on the basis of engine parameters or parameters in the timing chain system 1. The purpose of such a phase shift is substantially known in the art and it improves engine operation and helps to decrease fuel consumption. The tensioning rail 8 will automatically follow the movement of the guide rail 9 so that the actuation by the actuator 10 also has automatic influence on the pivotal movement of the tensioning rail 8. This is because the whole adjusting means 5 is a balanced system because the timing chain 4 keeps a load on the tensioning rail 8 as well as the guide rail 9 while the chain tensioner 22 is acting therebetween. The chain tensioner 22 provides on the one hand for respective movement so that both rails are moved in opposite pivotal direction until the system is balanced by the load of the chain 4. In addition and during operation the chain tensioner 22 provides for a sufficient dampening function as long as sufficient hydraulic fluid is collected in the collecting pocket 33 and supplies the pressure chamber 26. The whole timing chain system 1 runs in a chain casing containing a sufficient amount of hydraulic fluid (lubricating oil) so that an oil sump is created. By movement of the timing chain system 1, especially the camshaft sprocket 3 and the timing chain 4, hydraulic fluid is distributed within the casing and thus also enters the collecting pocket 33. In addition thereto, the casing might also be provided with a means that is shaped to guide the hydraulic fluid into the collecting pocket 33.

The inventors have realized that in such a drive where a substantial distance D_{S} is present, a phase shift function creates a potentially asymmetric load onto the tensioning rail 8 which cannot be handled by a linear driven tensioning shoe. In usual timing chain systems, the pivot axis of a pivotally attached tensioning rail is always located near the crankshaft sprocket and not near the camshaft sprocket but in the inventive system the tensioning rail is used upside down. The chain tensioner 22 is integrated into the guide rail 9 and thus provides for a tensioning, a damping and an adjusting function. The adjusting function is to compensate where the length of the timing chain will increase during its service life and the chain tensioner still provides for a compensation. It is also possible to use a chain tensioner which has an adjustable operating range which successively moves outward to prospectively compensate for the length change of the timing chain.

### Reference sign list

- 1: timing chain system
- 2,2.1: crankshaft sprocket axis
- 3,3.1: camshaft sprocket axis
- 4: timing chain
- 5: adjusting means
- 6: taut strand
- 7: slack strand
- 8: tensioning rail
- 9: guide rail
- 10,10.1: actuator piston
- 11,11.1: pivot bolt axis
- 12: pivot bolt
- 12.1: axis
- 13: body portion
- 14: guide shoe
- 15: attachment section
- 16: pressure plate
- 17: body portion
- 18: guide shoe
- 19: attachment eye
- 20: attachment eye
- 21: hydraulic fluid collecting means
- 22: chain tensioner
- 23: housing bore
- 24: tensioning piston
- 25: end face
- 26: pressure chamber
- 27: compression spring
- 28: filling body
- 29: inlet
- 30: one-way valve
- 31: locking pin
- 32: plate
- 33: collecting pocket
- 34: bore
- 35: contact point
- 36: funnel

| | **Distance signs** |
|---|---|
| Distance between camshaft sprocket axis and crankshaft sprocket axis | **D_{S}** |
| Distance between actuator connection and pivot axis | **D_{A}** |
| Distance between pivot axis and contact point | **D_{K}** |

## Claims

1. Timing chain system (1) comprising:
a crankshaft sprocket (2), at least one camshaft sprocket (3), a timing chain (4) operably connecting the crankshaft sprocket (2) and at least one camshaft sprocket (3) and adjusting means (5) which adjust the phase of the at least one camshaft sprocket (3) relative to that of the crankshaft sprocket (2), **characterized in that** the adjusting means (5) comprises a pivotally attached tensioning rail (8) which is biased against the inside of the slack strand (7) of the timing chain (4) between the crankshaft sprocket (2) and at least one camshaft sprocket (3), a pivotally attached guide rail (9) which is in contact with the inside of the taut strand (6) of the timing chain (4) between the crankshaft sprocket (2) and at least one camshaft sprocket (3) and an actuator (10) which adjusts the pivotal position of the tensioning rail (8) and the guide rail (9) to thereby adjust the phase of the at least one camshaft sprocket (3) relative to that of the crankshaft sprocket (2), wherein the actuator (10) acts only on the guide rail (9) for moving the guide rail (9) whereas the tensioning rail (8) follows the movement of the guide rail (9) by means of the balance in chain tension so that an increase of the effective length of the taut strand leads to a decrease of the effective length of the slack strand by approximately the same amount when the phase of the at least one camshaft sprocket (3) relative to that of the crankshaft sprocket (2) is adjusted by the adjusting means (5).

2. Timing chain system (1) according to claim 1,
**characterized in that** the actuator (10) is designed to carry out a common adjustment of the tensioning rail (8) and the guide rail (9) both either in clockwise or in counter clockwise pivotal direction.

3. Timing chain system (1) according to claim 1 or 2,
**characterized in that** the pivot axis (11.1, 12.1) of the tensioning rail (8) and the guide rail (9) are arranged in a parallel distance from each other.

4. Timing chain system (1) according to claim 3,
**characterized in that** the tensioning rail (8) is biased against the inside of the slack strand (7) of the timing chain (4) by aid of a damping chain tensioner (22).

5. Timing chain system (1) according to claim 4,
**characterized in that** the chain tensioner (22) is arranged on the guide rail (9).

6. Timing chain system (1) according to claim 5,
**characterized in that** the guide rail (9) comprises a rail body portion (17) housing the chain tensioner (20).

7. Timing chain system (1) according to claim 6,
**characterized in that** the guide rail body (17) of the guide rail (9) and a housing of the chain tensioner (22) forming a unitary element.

8. Timing chain system (1) according to one of claims 3 to 7,
**characterized in that** the guide rail (9) forms an open hydraulic fluid pocket (33) for collecting hydraulic fluid and forming an hydraulic fluid reservoir which is in flow communication with an inlet (29) of the chain tensioner (22).

9. Timing chain system (1) according to one of claims 1 to 8,
**characterized in that** the actuator (10) acts on the guide rail (9) in a distance (DA) from the pivot axis (12.1) of the guide rail (9) which is at least 25% of the shortest distance (DK) from the pivot axis (12.1) of the guide rail (9) and the contact point (35) of the chain tensioner (22) and the tensioning rail (8).

10. Timing chain system (1) according to one of claims 3 to 7,
**characterized in that** the shortest distance (DK) from the pivot axis (12.1) of the guide rail (9) or the pivot axis (11.1) of the tensioning rail (8) to the contact point (35) of the chain tensioner (22) and the tensioning rail (8) is at least 50% of the shortest distance (DS) between the axis (2.1) of the crankshaft sprocket (2) and the axis (3.1) of at least one camshaft sprocket (3).

11. Timing chain system (1) according to one of the preceding claims,
**characterized in that** the shortest length of the effective sliding contact between the guide rail (9) or the tensioning rail (8) is at least 60% of the shortest distance (DS) between the axis (2.1) of the crankshaft sprocket (2) and the axis (3.1) of at least one crankshaft sprocket (3).

12. Adjusting means (5) for a timing chain system (1) according to one of claims 1 to 11 comprising a pivotally attached tensioning rail (8) which is biased against the inside of the slack strand (7) of the timing chain (4) between the crankshaft sprocket (2) and at least one camshaft sprocket (3), a pivotally attached guide rail (9) which is in contact with the inside of the taut strand (6) of the timing chain (4) between the crankshaft sprocket (2) and at least one camshaft sprocket (3) and an actuator (10) which adjusts the pivotal position of the tensioning rail (8) and the guide rail (9) to thereby adjust the phase of the at least one camshaft sprocket (3) relative to that of the crankshaft sprocket (2), wherein the actuator (10) acts only on the guide rail (9) for moving the guide rail (9) whereas the tensioning rail (8) follows the movement of the guide rail (9) by means of the balance in chain tension so that an increase of the effective length of the taut strand leads to a decrease of the effective length of the slack strand by approximately the same amount when the phase of the at least one camshaft sprocket (3) relative to that of the crankshaft sprocket (2) is adjusted by the adjusting means (5).

13. IC engine comprising a crankshaft, at least one camshaft and a timing chain system (1) according to one of claims 1 to 11.

14. IC engine according to claim 13, comprising only one camshaft sprocket (3) whereby the crankshaft sprocket (2) and the camshaft sprocket (3) having an identical number of teeth.

## Patentansprüche

1. Steuerkettensystem (1) umfassend:
ein Kurbelwellenkettenrad (2), mindestens ein Nockenwellenkettenrad (3), eine das Kurbelwellenkettenrad (2) und das mindestens eine Nockenwellenkettenrad (3) betriebsfähig miteinander verbindende Steuerkette (4) und Anpassungsmittel (5), die die Phase des mindestens einen Nockenwellenkettenrads (3) relativ zu der des Kurbelwellenkettenrads (2) anpassen, **dadurch gekennzeichnet, dass** die Anpassungsmittel (5) eine schwenkbar befestigte Spannschiene (8), die gegen die Innenseite des Lostrums (7) der Steuerkette (4) zwischen dem Kurbelwellenkettenrad (2) und mindestens einem Nockenwellenkettenrad (3) vorgespannt ist, eine schwenkbar befestigte Führungsschiene (9), die mit der Innenseite des Zugtrums (6) der Steuerkette (4) zwischen dem Kurbelwellenkettenrad (2) und mindestens einem Nockenwellenkettenrad (3) in Kontakt ist, und einen Aktuator (10), der die Schwenkposition der Spannschiene (8) und der Führungsschiene (9) anpasst, um dadurch die Phase des mindestens einen Nockenwellenkettenrads (3) relativ zu der des Kurbelwellenkettenrads (2) anzupassen, umfassen, wobei der Aktuator (10) nur auf die Führungsschiene (9) wirkt, um die Führungsschiene (9) zu bewegen, wohingegen die Spannschiene (8) der Bewegung der Führungsschiene (9) mittels des Gleichgewichts in der Kettenspannung folgt, so dass eine Erhöhung der effektiven Länge des Zugtrums zu einer Verkürzung der effektiven Länge des Lostrums um etwa den gleichen Betrag führt, wenn die Phase des mindestens einen Nockenwellenkettenrads (3) durch die Anpassungsmittel (5) relativ zu der des Kurbelwellenkettenrads (2) angepasst wird.

2. Steuerkettensystem (1) nach Anspruch 1, **dadurch gekennzeichnet, dass** der Aktuator (10) ausgelegt ist, um eine gemeinsame Anpassung sowohl der Spannschiene (8) als auch der Führungsschiene (9) entweder in eine Drehrichtung im Uhrzeigersinn oder gegen den Uhrzeigersinn durchzuführen.

3. Steuerkettensystem (1) nach Anspruch 1 oder 2, **dadurch gekennzeichnet, dass** die Drehachsen (11.1, 12.1) der Spannschiene (8) und der Führungsschiene (9) in einem parallelen Abstand zueinander angeordnet sind.

4. Steuerkettensystem (1) nach Anspruch 3, **dadurch gekennzeichnet, dass** die Spannschiene (8) mithilfe eines gedämpften Kettenspanners (22) gegen die Innenseite des Lostrums (7) der Steuerkette (4) vorgespannt ist.

5. Steuerkettensystem (1) nach Anspruch 4, **dadurch gekennzeichnet, dass** der Kettenspanner (22) an der Führungsschiene (9) angeordnet ist.

6. Steuerkettensystem (1) nach Anspruch 5, **dadurch gekennzeichnet, dass** die Führungsschiene (9) einen Schienenkörperbereich (17) umfasst, der den Kettenspanner (22) aufnimmt.

7. Steuerkettensystem (1) nach Anspruch 6, **dadurch gekennzeichnet, dass** der Führungsschienenkörper (17) der Führungsschiene (9) und ein Gehäuse des Kettenspanners (22) als ein einstückiges Bauteil ausgebildet sind.

8. Steuerkettensystem (1) nach einem der Ansprüche 3 bis 7, **dadurch gekennzeichnet, dass** die Führungsschiene (9) eine offene Hydraulikfluidtasche (33) zum Sammeln von Hydraulikfluid und zum Ausbilden eines in Fluidverbindung mit einem Einlass (29) des Kettenspanners (22) stehenden Hydraulikfluid-Reservoirs ausbildet.

9. Steuerkettensystem (1) nach einem der Ansprüche 1 bis 8, **dadurch gekennzeichnet, dass** der Aktuator (10) in einem Abstand (DA) von der Drehachse (12.1) der Führungsschiene (9) auf die Führungsschiene (9) wirkt, der mindestens 25% des kürzesten Abstands (DK) zwischen der Drehachse (12.1) der Führungsschiene (9) und dem Kontaktpunkt (35) des Kettenspanners (22) mit der Spannschiene (8) beträgt.

10. Steuerkettensystem (1) nach einem der Ansprüche 3 bis 7, **dadurch gekennzeichnet, dass** der kürzeste Abstand (DK) zwischen der Drehachse (12.1) der Führungsschiene (9) oder der Drehachse (11.1) der Spannschiene (8) und dem Kontaktpunkt (35) des Kettenspanners (22) mit der Spannschiene (8) mindestens 50% des kürzesten Abstandes (DS) zwischen der Achse (2.1) des Kurbelwellenkettenrads (2) und der Achse (3.1) des mindestens einen Nockenwellenkettenrads (3) beträgt.

11. Steuerkettensystem (1) nach einem der vorhergehenden Ansprüche, **dadurch gekennzeichnet, dass** die kürzeste Länge des effektiven Gleitkontakts zwischen der Führungsschiene (9) oder der Spannschiene (8) mindestens 60% des kürzesten Abstandes (DS) zwischen der Achse (2.1) des Kurbelwellenkettenrads (2) und der Achse (3.1) des mindestens einen Nockenwellenkettenrads (3) beträgt.

12. Anpassungsmittel (5) für ein Steuerkettensystem (1) nach einem der Ansprüche 1 bis 11 umfassend eine schwenkbar befestigte Spannschiene (8), die gegen die Innenseite des Lostrums (7) der Steuerkette (4) zwischen dem Kurbelwellenkettenrad (2) und mindestens einem Nockenwellenkettenrad (3) vorgespannt ist, eine schwenkbar befestigte Führungsschiene (9) die mit der Innenseite des Zugtrums (6) der Steuerkette (4) zwischen dem Kurbelwellenkettenrad (2) und mindestens einem Nockenwellenkettenrad (3) in Kontakt steht, und einen Aktuator (10), der die Schwenkposition der Spannschiene (8) und der Führungsschiene (9) anpasst, um dadurch die Phase des mindestens einen Nockenwellenkettenrads (3) relativ zu der des Kurbelwellenkettenrads (2) anzupassen, wobei der Aktuator (10) nur auf die Führungsschiene (9) wirkt, um die Führungsschiene (9) zu bewegen, wohingegen die Spannschiene (8) der Bewegung der Führungsschiene (9) mittels des Gleichgewichts in der Kettenspannung folgt, so dass eine Erhöhung der effektiven Länge des Zugtrums zu einer Verkürzung der effektiven Länge des Lostrums um etwa den gleichen Betrag führt, wenn die Phase des mindestens einen Nockenwellenkettenrads (3) mittels des Anpassungmittels (5) relativ zu der des Kurbelwellenkettenrad (2) angepasst wird.

13. Verbrennungsmotor umfassend eine Kurbelwelle, mindestens eine Nockenwelle und ein Steuerkettensystem (1) nach einem der Ansprüche 1 bis 11.

14. Verbrennungsmotor nach Anspruch 13, umfassend nur ein Nockenwellenkettenrad (3), wobei das Kurbelwellenkettenrad (2) und das Nockenwellenkettenrad (3) eine identische Anzahl von Zähnen aufweisen.

## Revendications

1. Système de chaîne de distribution (1) comprenant :
un pignon de vilebrequin (2), au moins un pignon d'arbre à cames (3), une chaîne de distribution (4) qui connecte fonctionnellement le pignon de vilebrequin (2) et au moins un pignon d'arbre à cames (3), et un moyen de réglage (5) qui règle la phase dudit au moins un pignon d'arbre à cames (3) par rapport à celle du pignon de vilebrequin (2), **caractérisé en ce que** le moyen de réglage (5) comprend un rail tendeur (8) monté de manière pivotante, qui est poussé contre l'intérieur du brin mou (7) de la chaîne de distribution (4) entre le pignon de vilebrequin (2) et au moins un pignon d'arbre à cames (3), un rail de guidage (9) monté de manière pivotante, qui est en contact avec l'intérieur du brin tendu (6) de la chaîne de distribution (4) entre le pignon de vilebrequin (2) et au moins un pignon d'arbre à cames (3), et un actionneur (10) qui règle la position pivotante du rail tendeur (8) et du rail de guidage (9) pour régler ainsi la phase dudit au moins un pignon d'arbre à cames (3) par rapport à celle du pignon de vilebrequin (2), dans lequel l'actionneur (10) agit uniquement sur le rail de guidage (9) pour déplacer le rail de guidage (9) alors que le rail tendeur (8) suit le déplacement du rail de guidage (9) du fait de l'équilibre de la tension de chaîne, de telle sorte qu'une augmentation de la longueur efficace du brin tendu provoque une diminution de la longueur efficace du brin mou d'approximativement la même grandeur quand la phase dudit au moins un pignon d'arbre à cames (3) par rapport à celle du pignon de vilebrequin (2) est réglée par le moyen de réglage (5).

2. Système de chaîne de distribution (1) selon la revendication 1,
**caractérisé en ce que** l'actionneur (10) est conçu pour réaliser un réglage courant du rail tendeur (8) et du rail de guidage (9) par pivotement soit en sens horaire, soit en sens antihoraire.

3. Système de chaîne de distribution (1) selon la revendication 1 ou 2,
**caractérisé en ce que** les axes de pivotement (11.1, 12.1) du rail tendeur (8) et du rail de guidage (9) sont agencés parallèlement l'un à l'autre.

4. Système de chaîne de distribution (1) selon la revendication 3,
**caractérisé en ce que** le rail tendeur (8) est poussé contre l'intérieur du brin mou (7) de la chaîne de distribution (4) à l'aide d'un tendeur de chaîne amortisseur (22).

5. Système de chaîne de distribution (1) selon la revendication 4,
**caractérisé en ce que** le tendeur de chaîne (22) est agencé sur le rail de guidage (9).

6. Système de chaîne de distribution (1) selon la revendication 5,
**caractérisé en ce que** le rail de guidage (9) comprend une portion de corps de rail (17) dans laquelle est logé le tendeur de chaîne (20).

7. Système de chaîne de distribution (1) selon la revendication 6,
**caractérisé en ce que** le corps de rail de guidage (17) du rail de guidage (9) et un boîtier du tendeur de chaîne (22) constituent un élément unique.

8. Système de chaîne de distribution (1) selon l'une des revendications 3 à 7,
**caractérisé en ce que** le rail de guidage (9) constitue une poche de fluide hydraulique ouverte (33) pour collecter le fluide hydraulique et former un réservoir de fluide hydraulique qui est en communication fluide avec un orifice d'admission (29) du tendeur de chaîne (22).

9. Système de chaîne de distribution (1) selon l'une des revendications 1 à 8,
**caractérisé en ce que** l'actionneur (10) agit sur le rail de guidage (9) à une distance (DA) de l'axe de pivotement (12.1) du rail de guidage (9) qui est d'au moins 25 % de la distance la plus courte (DK) de l'axe de pivotement (12.1) du rail de guidage (9) au point de contact (35) du tendeur de chaîne (22) et du rail tendeur (8) .

10. Système de chaîne de distribution (1) selon l'une des revendications 3 à 7,
**caractérisé en ce que** la distance la plus courte (DK) de l'axe de pivotement (12.1) du rail de guidage (9) ou de l'axe de pivotement (11.1) du rail tendeur (8) au point de contact (35) du tendeur de chaîne (22) et du rail tendeur (8) est d'au moins 50 % de la distance la plus courte (DS) entre l'axe (2.1) du pignon de vilebrequin (2) et l'axe (3.1) d'au moins un pignon d'arbre à cames (3).

11. Système de chaîne de distribution (1) selon l'une des revendications précédentes,
**caractérisé en ce que** la longueur la plus courte du contact glissant efficace entre le rail de guidage (9) et le rail tendeur (8) est d'au moins 60 % de la distance la plus courte (DS) entre l'axe (2.1) du pignon de vilebrequin (2) et l'axe (3.1) d'au moins un pignon de vilebrequin (3).

12. Moyen de réglage (5) pour un système de chaîne de distribution (1) selon l'une des revendications 1 à 11, comprenant un rail tendeur (8) monté de manière pivotante qui est poussé contre l'intérieur du brin mou (7) de la chaîne de distribution (4) entre le pignon de vilebrequin (2) et au moins au moins un pignon d'arbre à cames (3), un rail de guidage (8) monté de manière pivotante, qui est en contact avec l'intérieur du brin tendu (7) de la chaîne de distribution (4) entre le pignon de vilebrequin (2) et au moins au moins un pignon d'arbre à cames (3), et un actionneur (10) qui règle la position pivotante du rail tendeur (8) et du rail de guidage (9) pour régler ainsi la phase dudit au moins un pignon d'arbre à cames (3) par rapport à celle du pignon de vilebrequin (2), dans lequel l'actionneur (10) agit uniquement sur le rail de guidage (9) pour déplacer le rail de guidage (9) alors que le rail tendeur (8) suit le déplacement du rail de guidage (9) du fait de l'équilibre de la tension de chaîne, de telle sorte qu'une augmentation de la longueur efficace du brin tendu provoque une diminution de la longueur efficace du brin mou d'approximativement la même grandeur quand la phase dudit au moins un pignon d'arbre à cames (3) par rapport à celle du pignon de vilebrequin (2) est réglée par le moyen de réglage (5).

13. Moteur à combustion interne comprenant un vilebrequin, au moins un arbre à cames, et un système de chaîne de distribution (1) selon l'une des revendications 1 à 11.

14. Moteur à combustion interne selon la revendication 13 comprenant un seul pignon d'arbre à cames (3), dans lequel le pignon de vilebrequin (2) et le pignon d'arbre à cames (3) présentent le même nombre de dents.
